# EUROPEAN PATENT APPLICATION

(11) **EP 1 681 538 A1**
(43) Date of publication of application: **19.07.2006**
(21) Application number: 05000944.8
(22) Date of filing: 18.01.2005
(51) Int. Cl.: G01C 21/34

(54) **Junction view with 3-dimensional landmarks for a navigation system for a vehicle**

(71) Applicant: Harman Becker Automotive Systems (Becker Division) GmbH, 76307 Karlsbad (DE)
(72) Inventor: Bülle-Drews, Christian, 22159 Hamburg (DE); Grabs, Volker, 22083 Hamburg (DE)
(74) Representative: Grünecker, Kinkeldey, Stockmair & Schwanhäusser Anwaltssozietät

(57) **Abstract**

The present invention relates to a method for route guidance usable in a vehicle navigation system with a display device comprising the steps of determining the location of a vehicle and displaying the surrounding area of the determined location of the vehicle in a digital map with at least one item that represents a 3-dimensional object being displayed as a corresponding vector graphic in a 3-dimensional perspective view, if a specific traveling condition of the vehicle is fulfilled. The present invention also relates to a navigation system realizing the inventive method.

## Description

### Field of Invention

The present invention relates to a method for route guidance by a navigation system and a navigation system for a vehicle. In particular, it relates to a method for route guidance by displaying 3-dimensional perspective views to a driver and a navigation system with a display device, which provides 3-dimensional perspective views.

### Prior Art

The use of navigation systems in vehicles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically use electronic maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection (US Patent Ser. No. 6,611,753). Herein, the terms 'intersection' and 'junction' are used in an interchangeable way.

In order to provide the navigation functions the navigation systems make use of one or more detailed databases that comprise data which represent physical features of a geographic region. However, a main difficulty in providing the geographic data for use by some navigation application program relates to the efficient utilization of the available computer resources as storage capacity and the memory and performance of a computer central processor unit (CPU). Usually, 3-dimensional polygon data used to model a 3-dimensional map is stored in a medium as, for example, a CD-ROM or DVD, or the data is calculated by the navigation system on the grounds of 2-dimensional map data supplemented by width and height information. In the first case, more complicated geographic locations cannot be displayed accurately due to the restricted amount of data that can be stored, and in the latter case, the load of the CPU readily exceeds reasonable levels.

If, for example, it takes the navigation system more than a few seconds to calculate the recommended route and to display the forward path and surrounding area properly, the driver may have moved beyond a point at which information provided by the navigation system is relevant as is, in particular, the case at junctions.

Consequently, the limited memory and CPU performance of the navigation systems do not allow for providing individual junction views of the intersections that are included in the digital map. Rather, the junctions views are presented by means of well-defined standard 3-dimensional models for map display that consist of standard elements as disclosed, for example, in the US patent 6,597,354.

To be more specific usually the following steps are performed to enable the navigation system to display detailed 3-dimensional junction views. In the best case video data is obtained from a junction and stored to an offline-database. The database comprises a main image file comprising bitmap images for all lanes, sign post information, landmarks etc. The navigation system models the junction view on the basis of the afore-mentioned database by means of standard bitmap images only. These bitmap images consist of a bitmap of the road geometry, for example, three lanes with an exit for one of these lanes, a bitmap of the recommended lane, optional bitmaps for signposts, landmarks, the skyline and the color of the sky. As a result, the calculation of the junction view is performed by simplified and non-typical elements, i.e. standard bitmaps, rather than by utilizing individual elements, which would desirably improve the driver's recognition of landmarks and general orientation when approaching a complex junction.

### Description of the Invention

It is therefore the problem underlying the present invention to provide the driver of a vehicle with a 3-dimensional map display and, in particular, 3-dimensional junction views by a method and a device that overcome the above-mentioned drawbacks.

The problem is solved by a method for route guidance usable in a vehicle navigation system with a display device according to claim 1, comprising the steps of determining the location of a vehicle, displaying the surrounding area of the determined location of the vehicle in a digital map with at least one item that represents a 3-dimensional object being displayed as a corresponding vector graphic in a 3-dimensional perspective view, if a specific traveling condition of the vehicle is fulfilled. The specific traveling condition may simply consist of a driver being in the vehicle.

The problem is also solved by a vehicle navigation system according to claim 8 comprising a location system, a bitmap database and a display device and that is characterized by a vector database comprising vector graphics representing items that are also represented in the bitmap database, means for relating data of the bitmap database to data of the vector database, means for determining whether at least one item of a digital map shall be represented by a vector graphic in a 3-dimensional perspective view, a processor operatively connected with the means for determining whether at least one item of a digital map shall be represented by a vector graphic in a 3-dimensional perspective view and provided for calculating the perspective view of the at least one item of the digital map that shall be represented by a vector graphic in a 3-dimensional perspective view; and controlling the display device such that display layers comprising bitmap data from the bitmap database and at least one different display layer comprising vector graphics data from the vector database are displayed.

Individual objects of special interest are scanned by means of survey systems, in particular, laser scanners and thereby digitized representations of the objects are obtained. Based on the recorded pictures of buildings, or the like, 3-dimensional models are synthesized as vector graphics. The displaying of individual objects in a 3-dimensional perspective view highly improves the driver's orientation and helps him effectively to positively choose the right road at a junction, i.e. the road to be taken to the predetermined destination.

The employment of vector graphics according to the inventive method and navigation system significantly improves the representation of individual objects. Whereas bitmapped images consist of rows and columns of dots, vector graphics are represented as mathematical formulas that define all the shapes in an image. Vector graphics, being based on mathematical functions, are scalable, not restricted to rectangular shapes and transparent. Moreover, vector graphics require less disk space than bitmaps, since they can be calculated from relatively few data points that have to be stored. Thus, vector graphics can relatively easily be used for calculating and displaying 3-dimensional perspective views of synthesised individual objects.

Preferably, the specific traveling condition of the inventive method consists of the vehicle approaching and/or passing a point of interest, in particular, a junction. Other points of interest may comprise town landmarks, bridges, and gas stations. Moreover, an entire city may represent a point of interest and when a vehicle passes a city adjacent to a motorway a 3D view of the city may be displayed to the driver.

In order to save the limited computer resources of the present navigation systems, it may be sufficient to display 3-dimensional perspective views of individual objects in the case of complex road topologies only. By the term junction herein any kind of intersection, crossing, rotary turn, etc. is meant. Also, it should be understood that the process of approaching or passing a junction comprises temporal phases of vanishing speed of the vehicle due to the vehicle being caught up in a congestion, for example.

Furthermore, the step of displaying the surrounding area may comprise the steps providing a bitmap database comprising bitmaps of the surrounding area, providing a vector database comprising corresponding vector graphics representing items that are also represented in the map database, determining at least one of the items that are visible in the surrounding area of the vehicle within some angular range in the forward path direction and are represented by one of the vector graphics included in the vector database, relating the bitmap representation in the bitmap database of the at least one of the items to the corresponding vector graphic representing the same of the at least one of the items, and determining a perspective view of the at least one of the items visible in the surrounding area of the vehicle and represented by the corresponding vector graphic in the vector database.

The vector database can separately be updated and the vector graphics are desirably provided in a data format and are calculated from algorithms, which are optimized for the limited computer resources. Data of each vector graphic has to be stored in a vector database only once. Based on this data calculation of views of the represented buildings from different perspectives can be performed relatively fast.

Advantageously, the bitmap database of the navigation system may comprise a map database and/or a junction view database. The map database can be a conventional one. The junction view database may comprise the position of the cursor, references to the bitmaps to be displayed, standard bitmaps for the road topology and the sky and the skyline.

Furthermore, the displaying of the surrounding area may comprise the concurrently performed steps of displaying at least one display layer in the bitmap representation of data provided by the map database and displaying at least one display layer in the vector graphics representation showing a perspective view of the at least one of the items in the surrounding area of the vehicle that is represented by the corresponding vector graphic in the vector database.

The employment of different display layers allows for an efficient and reliable management of the process of displaying concurrently different kinds of digital objects.

Preferably, at least one item displayed in a 3-dimensional perspective view can be a landmark, i.e. landmarks are one kind of items synthetically represented by vector graphics of the vector graphics database. Since landmarks, in particular, towns' landmarks exhibit a high memo value they are particular suitable to help the driver to orientate himself when faced with a complex road topology.

The appropriate combination of bitmaps and vector graphics is of particular importance for the improved junction view disclosed herein. Accordingly, the vehicle navigation system according to the present invention comprises means for relating data of the bitmap database to data of the vector database that are provided for relating bitmap representations in the bitmap database to graphics vector representations in the vector database.

In a preferred embodiment of the inventive navigation system the means for relating bitmap representations in the bitmap database to graphics vector representations in the vector database can be realized by references from the map database to the vector database. These references allow for a fast and positive numerical allocation of the digital objects to be displayed to the driver.

Advantageously, the map database and/or the junction view database may comprise bitmap representations of a junction and/or a sky and/or a skyline and/or signposts. Such items have been proven helpful for the driver's orientation.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows representatively a comparison of a vector graphic and a digital picture taken from a town's landmark.

Figure 2 shows a flow diagram of the method according to an example of the present invention.

Figure 3 shows a flow diagram of an advantageous embodiment of the method according to the present invention.

Figure 4 shows representatively a junction view according to an example of the present invention.

Figure 5 illustrates elements of a vehicle navigation system with an improved 3-dimensional perspective view of points of interest, as landmarks, according to an example of the present invention.

Figure 6 illustrates elements of a vehicle navigation system with an improved 3-dimensional junction view according to an example of the present invention.

Where appropriate similar elements in different Figures have been given the same reference numeral for purposes of consistency and simplicity.

The present invention relates to a method and a navigation system that provide the driver with improved 3-dimensional views and, in particular, junction views by incorporating 3-dimensional vector graphics in the synthesized representation of junctions in digital maps.

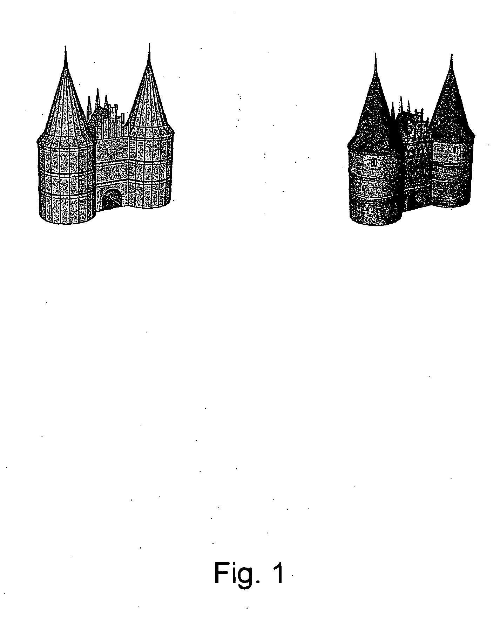

Figure 1 representatively illustrates a vector graphic (left-hand side) obtained from a digital picture (right-hand side) recorded with a video camera. The original points of interest, i.e. items of a map stored in a map database that are desirably be represented by vector graphics, are recorded by video cameras, photo cameras, or the like. Of particular importance for the recognition of the driver are landmarks, i.e. in particular, towns' landmarks and other prominent buildings.

Based on the recorded images of buildings, or the like, 3-dimensional models are synthesized as vector graphics. Preferably, such synthesized models have data formats and algorithms that are adapted to the limited computer resources of vehicle navigation systems. Since vector graphics are based on mathematical functions, they can be calculated from relatively few data points that have to be stored. Data of each vector graphic has to be stored in a vector database only once.

Vector graphics, as shown in Figure 1 (left-hand side) replace the respective standard bitmap representation in conventional junction views and thereby assist significantly the driver to orientate himself and to choose the right road from a variety of roads of junctions.

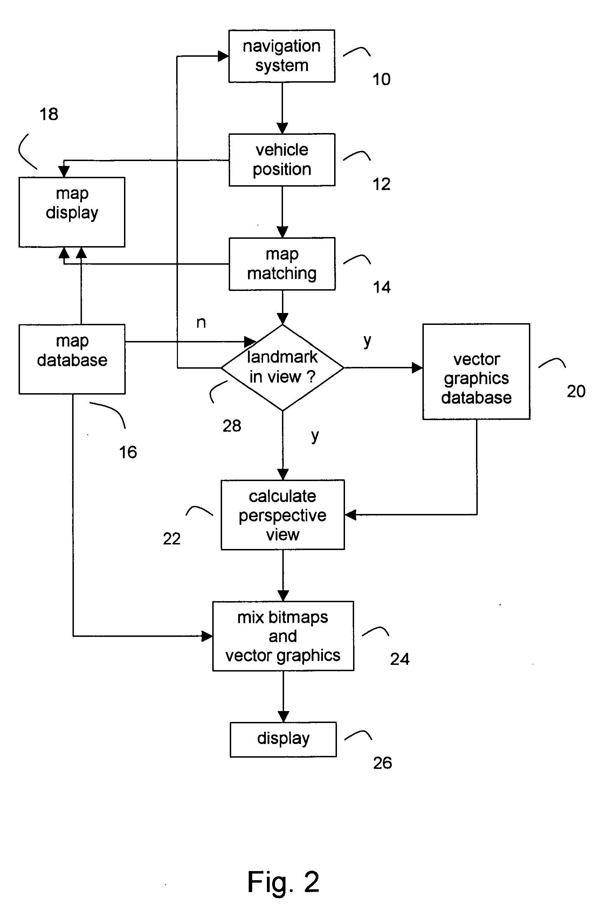

The method according to one example of the present invention can generally be illustrated with reference to Figure 2. A vehicle is on its route recommended by the navigation system 10. The navigation system 10 continuously determines 12 the position of the vehicle, by taking into account data received by a GPS receiver and motion sensors.

Map matching 14 allows for a precise location of the vehicle in the digital map provided by the map database 16. The position in the map is displayed 18 to the driver. Based on the information about the actual position of the vehicle and the driving direction according to the recommended route the geographical section in view of the driver can be calculated. By means of the map matching 14 and the map database 16, it can be determined whether a landmark comes into view 28 in the forward path of the vehicle according to the predetermined route. If no landmark is detected, nothing special happens. The navigation system 10 further on determines the actual position 12 and speed of the vehicle.

If a landmark is detected and some reference in the map database 16 indicates that a vector graphic is available, the respective 3-dimensional vector graphics is looked up in the vector graphics database 20. Alternatively, the system can address the vector graphics database 20 independent from any reference information available from the map database 16.

For the appropriate 3-dimensional vector graphics the respective perspective view of the synthesized landmark is calculated 22. By means of a display controller the processed vector graphic can be concurrently displayed with the usual bitmap representation. The landmark represented by a standard bitmap in the map database is replaced or superposed by the respective vector graphics. Eventually, a mixed bitmap and vector graphics view 24 is displayed 26 to the user.

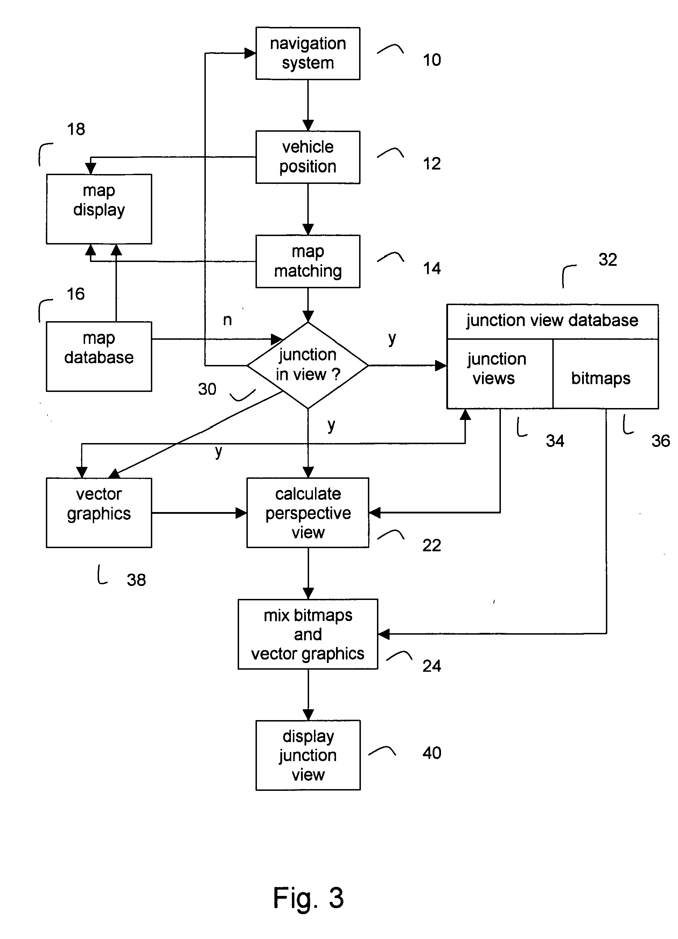

The method for displaying an improved junction view according to an advantageous embodiment of the present invention can be described with reference to Figure 3. A vehicle is on its route recommended by the navigation system 10. By means of the navigation system 10 the position of the vehicle is continuously determined 12.

Map matching 14 allows for a precise location of the vehicle in the digital map provided by the map database 16 and the position and the map are displayed 18 to the driver. Based on the map matching result 14, it can be determined whether or not a junction is in view 30. If no junction lies in the near-by forward path, nothing special happens. The navigation system 10 further on determines the actual position 12 as well as the speed of the vehicle.

If a junction comes into view, a junction view data base 32 is checked for 3-dimensional perspective junction views 34. The junction view data comprise the road geometry and the number of lanes. It also desirably comprises signposts or other inscriptions as, for example, street names or house numbers. Preferably the junction view data also comprises a sky and a skyline with the color of the sky being desirably adapted to the local time. The local time can, for example, be provided by the navigation system 10. All these kinds of data can be stored in the junction view database 32 as bitmaps 36.

Preferably the data sets of the junction view database 32 feature references to vector graphics 38 that are to be included in the complete view provided to the driver according to the present invention. Alternatively, it can independently be checked by the navigation system 10 whether or not vector graphics 38 are available for the junction approached by the vehicle without any references between the data of the junction view database 32 and the database providing the vector graphics 38. Also, it may be desirable to incorporate data links between the map database 16 and the vector graphics 38. The above mentioned alternatives of data linkage should not be understood as being exclusive-Given the actual position of the vehicle and the driving direction as recommended by the navigation system 10 the geographical section can be calculated for which it is desirably to display 3-dimensional perspective views of landmarks or other objects represented by vector graphics and considered as being useful for orientation. It may be preferable that the geographical section of interest is calculated as a segment of a circle given by an angle of about 90° and a radius of about 10 km, approximately corresponding to the human visual angle at the horizon. However, depending on the road geometry and, in particular, the slope, different ways of calculation of the geographical section of interest may be preferred.

If at least one object represented by a vector graphic is in view, the respective at least one data set comprising a vector graphic will be downloaded from the vector graphics database 38. The information provided by the data set comprise position, preferably coordinates in some mesh representation of the section to be displayed, and texture of the at least one object, for example, the landmark. The perspective view or views of the one or the number of objects represented by the vector graphics is continuously calculated 22, preferably in real time, on the grounds of the information about the actual position 12 and speed of the vehicle as well as the driving direction.

The vector graphics to be displayed can either be buffered or be directly output on designated display layers. If a plurality of landmarks is identified to be in view, it may be desirable to sort them according to their distances. Preferably, one may distinguish between landmarks in the foreground, landmarks at some intermediate distance and landmarks at the horizon and may output the respective vector graphics on different display layers. These display layers comprising vector graphics 38 have to be appropriately mixed 24 with display layers comprising bitmaps form the junction view database 32 and the combined layers have to be displayed 40 in the appropriate sequence, in order to obtain the inventive improved junction view 40.

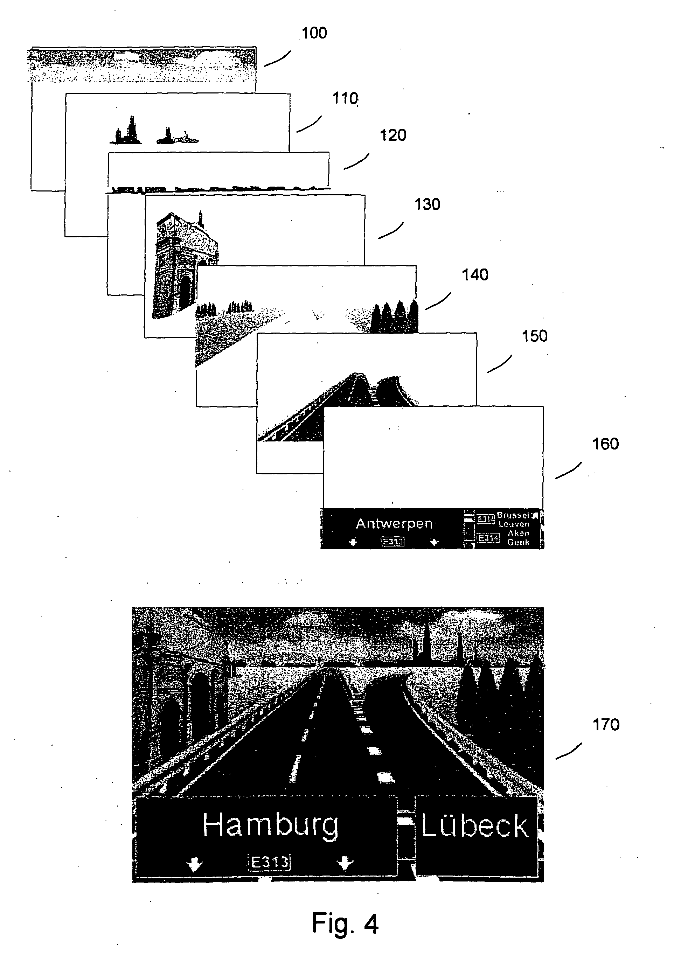

An example of a synthesized junction view according to an example of the present invention is shown in Figure 4. The very background display layer 100 shows a bitmap representing the sky. Landmarks in a 3-dimensional vector graphics representation are displayed in a display layer 110 directly before the background layer. The next display layer 120 shows a bitmap representation of the skyline. Next, the foreground town's landmark is displayed 130 in a perspective 3-dimensional view calculated for the vector graphics data. The display layers 140, 150, and 160 show bitmaps representing a foreground image, the road geometry and signposts, respectively. All the display layers are concurrently displayed 170 and updated continuously.

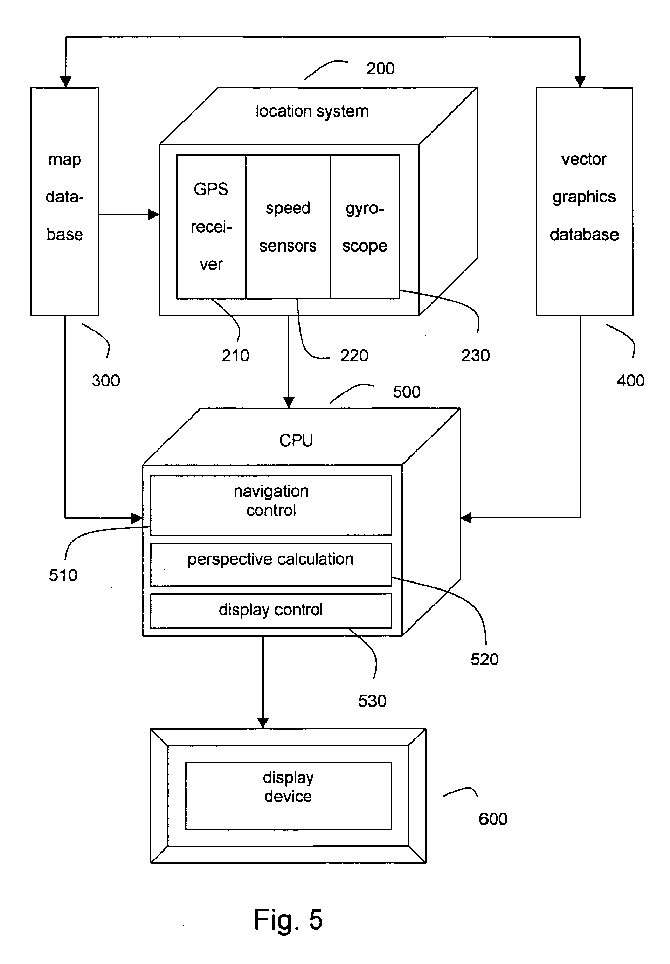

Figure 5 generally illustrates elements of a vehicle navigation system with an improved 3-dimensional view according to an example of the present invention. A location system 200 provides the data necessary for a precise determination of the actual position of the vehicle. Such a system comprises at least a GPS receiver 210 that receives radio waves transmitted from GPS satellites, speed sensor 220 and a gyroscope sensor 230. Speed sensors 220 may comprise ABS wheel sensors and detect directly the mileage of the vehicle. By a gyroscope sensor 230 the angular velocity of the vehicle is measured. The gyroscope 230 may be a piezo sensor detecting crystal vibrating in one plane to measure rotation of the vehicle around an axis that is directed perpendicular to the road.

Each of the elements of the location system 200 involve their own errors and, thus, it is may be desirable that they are combined in a way to compensate for such errors. Depending on the accurateness of the sensors it may be preferred to have them supplemented by, for example, geomagnetic sensors or sensors that measure directly the steering angle. Map matching with the data provided by a map database 300 allow for locating the vehicle in a digital map.

The information mentioned above can be processed by a central processor unit (CPU) 500 of the navigation system. The navigation control 510 processes the incoming data from the location system 200 and/or the map data base 300 and can locate the vehicle with high accuracy on the base of these data and provide the user with guidance directions. The CPU 500 may comprise one or more individual computing processors. If more than one processor is available, which may be preferable with respect to computing time, it may be advantageous to provide them with shared memory.

In one preferred embodiment of the present invention the data in the map database 300 exhibits references to the data of a vector graphics database 400. If an input in the map data base 300 has a reference to a data set in the vector graphics database 400, the respective vector graphic is downloaded by the CPU 500. Alternatively, the CPU 500 vector graphic is available for the section in view. The section in view may be a geographical section calculated as a segment of a circle given by an angle of about 90° and a radius of about 10 km, approximately corresponding to the human visual angle at the horizon.

Based on the information of the actual position and driving direction a perspective view of the 3-dimensional object represented by the vector graphics, preferably a town's landmark, is calculated 520. This calculation can be done by a CPU that may be reserved and may be specifically adapted for this kind of operation. The particular data format and algorithms for the design of the 3-dimensional graphics are desirably adapted to the relative limited computing resources available in the state-of-the-art navigation system.

The vector graphics on the one hand side, and the bitmaps on the other are sampled and mixed by a display control 530. The display control 530 controls a display device 600 to concurrently display all the display layers that comprise relevant information. For instance, the displayed view comprises a display layer showing the sky and the road geometry as well as signposts as bitmaps and a landmark at one side of the road.

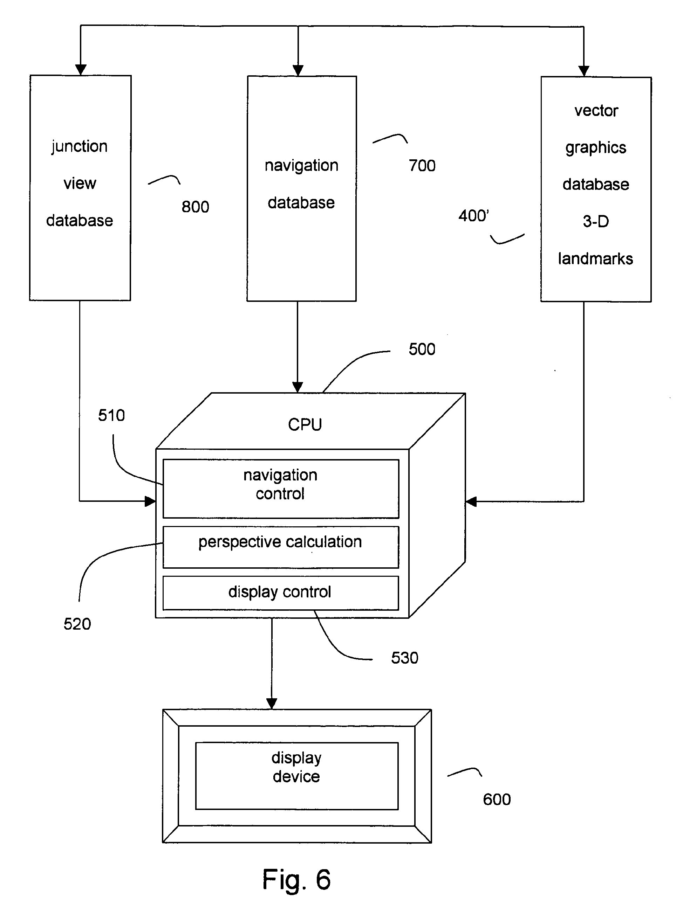

According to a further advantageous embodiment of the present invention, as illustrated in Figure 6, the set of employed databases in the embodiment comprises 1) a vector graphics database 400' comprising 3-dimensional representations of landmarks, textures of vector graphics and coordinates of the mesh models for calculating different perspective views of the landmarks, 2) a navigation database 700 providing information about the location of the vehicle and 3) a junction view database 800. The junction view database 800 preferably comprises bitmap representations of the junction views and the road geometry in general, the skyline, signpost, street names etc.

Preferably, the above-mentioned databases are linked to each other. References from the junction view database 800 to the vector graphics database 400' are particularly advantageous in order to relate the respective vector graphics to the appropriate position in the synthesized junction view.

The processor unit 500 determines by means of a navigation control 510 the actual position and speed of the vehicle on the grounds of the data provided by the navigation database 700. If the vehicle approaches a junction, the junction view data base 800 can be addressed by the CPU 500 and the respective junction view and additional bitmaps are downloaded.

Additionally, due to references from the junction view data base 800 to the vector graphics database 400' or, alternatively, without such references but rather on independent demand of the navigation database 700 or, alternatively, generally in response to a message that a junction is approached by the vehicle, the CPU 500 addresses the vector graphics database 400'.

If present, the appropriate data for a 3-dimensional representation of a landmark or another point of interest is downloaded. Based on the information of the position of the vehicle, the driving direction and the data from the navigation database 700 and/or junction view database 800, a perspective 3-dimensional view of the downloaded vector graphic is calculated 520 by the CPU 500.

A display control 530, that preferably operates as an independent integral part of the CPU 500, combines the different bitmap and vector graphics display layers in the appropriate sequence. For instance, display layers comprising synthesized bitmap representations of the sky, the skyline and the road geometry as well as signposts are combined with display layers showing one or more landmarks in the skyline and one or more landmarks in the foreground as illustrated in Figure 4. The completed 3-dimensisonal perspective view is eventually displayed by the display device 600.

## Claims

1. A method for route guidance usable in a vehicle navigation system with a display device comprising the steps of:
determining the location of a vehicle;
displaying the surrounding area of the determined location of the vehicle in a digital map with at least one item that represents a 3-dimensional object being displayed as a corresponding vector graphic in a 3-dimensional perspective view, if a specific traveling condition of the vehicle is fulfilled.

2. The method of claim 1, wherein the specific traveling condition consists of a driver being in the vehicle.

3. The method of claim 1, wherein the specific traveling condition consists of the vehicle approaching and/or passing a point of interest, in particular, a junction.

4. The method of one of the above claims, wherein the step of displaying the surrounding area comprises the steps of
providing a bitmap database comprising bitmaps of the surrounding area;
providing a vector database comprising corresponding vector graphics representing items that are also represented in the map database;
determining at least one of the items that are visible in the surrounding area of the vehicle within some angular range in the forward path direction and are represented by one of the vector graphics included in the vector database;
relating the bitmap representation in the bitmap database of the at least one of the items to the corresponding vector graphic representing the same of the at least one of the items; and
determining a perspective view of the at least one of the items visible in the surrounding area of the vehicle and represented by the corresponding vector graphic in the vector database.

5. The method of claim 4, wherein the bitmap database comprises a map database and/or a junction view database.

6. The method of one of the claims 4 or 5 wherein the displaying of the surrounding area comprises the concurrently performed steps of
displaying at least one display layer in the bitmap representation of data provided by the map database; and
displaying at least one display layer in the vector graphics representation showing a perspective view of the at least one of the items in the surrounding area of the vehicle that is represented by the corresponding vector graphic in the vector database.

7. The method of one of the above claims, wherein the at least one item is a landmark.

8. A vehicle navigation system comprising a location system, a bitmap database and a display device and that is **characterized by**
a vector database comprising vector graphics representing items that are also represented in the bitmap database;
means for relating data of the bitmap database to data of the vector database;
means for determining whether at least one item of a digital map shall be represented by a vector graphic in a 3-dimensional perspective view;
a processor operatively connected with the means for determining whether at least one item of a digital map shall be represented by a vector graphic in a 3-dimensional perspective view and provided for
calculating the perspective view of the at least one item of the digital map that shall be represented by a vector graphic in a 3-dimensional perspective view; and
controlling the display device such that display layers comprising bitmap data from the bitmap database and at least one different display layer comprising vector graphics data from the vector database are displayed.

9. A vehicle navigation system of claim 8, wherein the bitmap database comprises a map database and/or a junction view database.

10. The vehicle navigation system of one of the claims 8 or 9, wherein the means for relating data of the bitmap database to data of the vector database are provided for relating bitmap representations in the bitmap database to graphics vector representations in the vector database.

11. The vehicle navigation system of claim 10, wherein the means for relating bitmap representations in the bitmap database to graphics vector representations in the vector database are realized by references from the map database to the vector database.

12. The vehicle navigation system of one of the claims 8 - 11, wherein the map database and/or the junction view database comprise bitmap representations of a junction and/or a sky and/or a skyline and/or signposts.

13. The vehicle navigation system of one of the claims 8 - 12, wherein the vector database comprises vector graphics of landmarks.
